# EUROPEAN PATENT APPLICATION

(11) **EP 3 127 874 A1**
(43) Date of publication of application: **08.02.2017**
(21) Application number: 16182075.8
(22) Date of filing: 29.07.2016
(51) Int. Cl.: C02F 3/34, C22B 3/18, C02F 103/16, C02F 103/10

(54) **METHOD OF RECOVERING PRECIOUS METALS AND RARE-EARTH ELEMENTS FROM WASTE MATERIALS**

(30) Priority: 03.08.2015 IT UB20152810
(71) Applicant: Università degli Studi di Genova, 16126 Genova (IT)
(72) Inventor: ZOTTI, Mirca, 16126 Genova (IT); GIOVINE, Marco, 16126 Genova (IT); MARIOTTI, Mauro Giorgio, 16126 Genova (IT); CARBONE, Cristina, 16126 Genova (IT); CARDINALE, Anna Maria, 16126 Genova (IT); CECCHI, Grazia, 16126 Genova (IT); DI PIAZZA, Simone, 16126 Genova (IT)
(74) Representative: Villa, Livia

(57) **Abstract**

A method of recovering precious metals and rare-earth elements from waste materials is disclosed, said method comprising the use of a fungus isolated from mine mud and belonging to a genus selected from *Penicillium, Cladosporium* and combinations thereof. This fungus has been found to bioaccumulate said elements, thus allowing a selective and quantitative separation of the same.

## Description

### FIELD OF THE INVENTION

The present invention concerns a method of recovering precious metals and rare-earth elements from waste materials, said method comprising the use of a fungus belonging to a genus selected from *Penicillium, Cladosporium* and combinations thereof. This fungus has been found to bioaccumulate said elements, thus allowing a selective and quantitative separation of the same.

### STATE OF THE ART

Recently, the European Union has worked to identify the strategic raw materials used for the production of electrical and electronic products, particularly the precious metals belonging to the platinum group and the rare earths, having a high economic importance to the EU combined with a high risk associated with their supply. Indeed, Europe is not a primary producer of these materials, which actually are imported mainly from South Africa (precious metals) and China (rare earth elements, shortly 'REE').

Worldwide production of REE is about 133'600 t/year (US Geological Survey, Mineral Commodity Summaries, January 2011) and has been estimated that in 2010 the global demand was of 136' 100 t/year (Lynas Rare Earths Says Demand to Grow at 9% Year, Bloomberg.com/news, October 2010).

Currently, each EU citizen produces about 17 kg of waste electrical and electronic equipment (WEEE) per year. It is estimated that by 2020, this number will rise to 24 kg. Every year all over the world, huge amounts of raw materials are considered as waste, the so-called urban mines. In this regard, the recovery of critical raw materials, particularly metals, from WEEE, has a significant impact of the following aspects:
- economic: recovery is a key driver for the development of the rare earths demand, it's characterized by an intrinsic economic value in terms of money saving (with respect to extraction, transport, production) and creating a potential new market;
- environmental: it prevents severe environmental damage such as CO₂ and NOx emission (from extraction to disposal), and contributes to energy saving;
- social: it reduces health damages, creates new employment opportunities "circular economy", promote recycling on a global scale.

In literature, several methods are known for recovering metals from natural and non-natural sources, some being still under study, others already ready as "packages" for industrial use.

As for the recovery of metals from waste electrical and electronic equipment (shortly WEEE), the techniques currently considered are hydrometallurgical, pyrometallurgical and biometallurgical processes.

An hydrometallurgical process involves a strongly acid attack of the WEEE previously prepared (by crushing and optional demagnetization) to obtain an acid solution of dissolved metals. The process may be followed by an electrolytic reduction to obtain some metals in the elemental state or by a precipitation to obtain the salts of the metals. This technique offers a very good yield, but requires the use of a large volumes of acid solutions; moreover, it is suitable only for recovery purposes and not for the purification of polluted sludges.

A pyrometallurgic process is based on the extraction of metals from the WEEE via alloying with other metals in a molten state (e.g. via extraction of neodymium from permanent magnets Nd-Fe-B, through reaction with magnesium); this process presents good yields, but at the moment it has been set up only for some elements. It has the disadvantage of working at high temperatures.

Biometallurgical techniques are based on biodissolution, bioabsorption or bioaccumulation by means of bacteria or other organisms. To date, in the field of environmental remediation, bacteria mainly are used, which work in a highly acidic environment to extract metals from contaminated sites (e.g. mining dumps). These processes result in an acid leachate, containing metals, and must then undergo further treatments before being disposed of as waste.

In view of the above, the object of the present invention is to provide a method of recovering metals from waste materials, which overcome the drawbacks of the known treatments.

### SUMMARY OF THE INVENTION

The above object has been achieved by a method of recovering precious metals and rare-earth elements from waste materials, as claimed in claim 1.

With the term "waste materials", it is meant to include wastewaters, industrial sludge, waste electrical and electronic equipment (shortly 'WEEE' or 'e-waste'), mine mud waste, hospital and medical waste (such as, for example, liquid contrast agents for diagnostic techniques, or niobium alloys used in surgical implants), debris, municipal solid waste (MSW), or combinations thereof, wherein precious metals and/or rare-earth elements are present.

In a further aspect, the present invention concerns the use of a fungus of genus *Penicillium* isolated from mine mud, for bioaccumulating and recovering precious metals and/or rare-earth elements from mine mud waste containing the same.

In an additional aspect, the present invention concerns the use of a fungus of genus *Cladosporium* isolated from mine mud, for bioaccumulating and recovering precious metals and/or rare-earth elements from waste electrical and electronic equipment containing the same.

The characteristics and the advantages of the present invention will become apparent from the following detailed description and from the working examples provided for illustrative purposes.

### DETAILED DESCRIPTION OF THE INVENTION

The subject of the invention therefore is a method of recovering precious metals and rare-earth elements from waste materials containing the same, said method comprising the steps of:
1) providing waste materials,
2) providing a fungus isolated from mine mud and belonging to a genus selected from *Penicillium, Cladosporium* and combinations thereof,
3) inoculating and incubating said fungus on a medium added with said waste materials,
4) collecting and drying fungal biomass resulting from step 3), and
5a) disposing the dried fungal biomass containing the precious metals and/or rare-earth elements bioaccumulated therein, or
5b) digesting the dried fungal biomass in a strong acid solution to separate the precious metals and rare-earth elements bioaccumulated therein.

The elements that can be recovered through the method of the invention are precious metals and rare-earth elements. With the term "precious metals", it is meant a rare, naturally occurring metallic chemical element of high economic value, including gold (Au), silver (Ag), platinum (Pt), palladium (Pd), ruthenium (Ru), rhodium (Rh), osmium (Os), and iridium (Ir). Rare earth elements are cerium (Ce), dysprosium (Dy), erbium (Er), europium (Eu), gadolinium (Gd), holmium (Ho), lanthanum (La), lutetium (Lu), neodymium (Nd), praseodymium (Pr), promethium (Pm), samarium (Sm), scandium (Sc), terbium (Tb), thulium (Tm), ytterbium (Yb) and yttrium (Y).

These elements find application in many industrial sectors and in the creation of innovative products, for example, in the metallurgical industry, as deoxidizers in steel and metallurgical processes, in the petrochemical industry as catalysts in the crude oil treatments, in the electronic and data-processing fields as components of microprocessors, disk drives, television screens, network cards, cell phones, batteries NiMH; in lighting, they are present in fluorescent lamps and low-power LED lamps; in automotive batteries, electric motors and catalytic converters.

Some lanthanides are also used in the medical field; for example gadolinium is present in special hospital waste (liquid contrast agents for diagnostic techniques, etc.) and niobium alloys are used in surgical implants because they do not react with human tissue.

The use of these elements in several fields of application causes the production of a considerable amount of waste containing such elements.

Therefore, in step 1) of the method, waste materials are provided, that are known to contain precious metals and/or rare-earth elements.

In step 2), a fungus isolated from mine mud and belonging to a genus selected from *Penicillium, Cladosporium* and combinations thereof is provided.

The fungus can be isolated directly from contaminated matter containing precious metals and/or rare-earth elements, i.e. mine mud, according to methods known in the art, such as preferably the modified dilution plate method of Gams et al.. (Gams W, et al., 1987, (C.B.S.) Centraalbureau voor Schimmelcultures. Course of Mycology 3rd ed. Baarn: Institute of the Royal Netherlands Academy of Arts and Sciences. 136 p). This technique allows the isolation of vital fungal strains from a small sample (about 1 g) of soil or contaminated matter. More precisely, the sample is diluted in sterile deionized water at different concentrations, and then 1 ml of this solution is inoculated on different solid media and incubated in the dark at 25°C for 7-15 days. The inoculated Petri dishes are controlled every day of the incubation period to monitor the potential fungal growth, and consequently to allow a more efficient isolation of single strains. Later these strains are stored in axenic cultures in test tubes at room temperature, or, for a long time conservation, they could be lyophilized or cryopreserved (-80°C).

The type, amount, and properties of mine mud produced at different mines vary depending on the resource being mined, process technology used, and geology at the mine site. However, for the purposes of the present invention, the term "mine mud" denotes mine mud containing precious metals and/or rare-earth elements. In other words, step 2) encompasses to provide a fungus isolated from mine mud containing precious metals and/or rare-earth elements, and belonging to a genus selected from *Penicillium, Cladosporium* and combinations thereof.

In step 3), said fungus is inoculated and incubated on a medium added with said waste materials.

It has been surprisingly found that a fungus isolated from mine mud containing precious metals and/or rare-earth elements and belonging to said genus shows a very remarkable capability of bioaccumulation of precious metals and rare-earth elements. Without wishing to be bound by any theory, it is believed that, in order to survive in an environment such as a mine mud, said fungus adapts itself in a way that makes it suitable for bioaccumulating and recovering precious metals and/or rare-earth elements, even if the mechanism underlying said adaptation has not yet been clarified.

Preferably, said fungus belongs to the species selected from the group consisting of *Penicillium bilaiae, Penicillium chrysogenum, Penicillium citrinum, Penicillium vulpinum, Penicillium commune, Penicillium digitatatum, Penicillium expansum, Penicillium funiculosum, Penicillium hirsutum, Penicillium italicum,* and combinations thereof.

In preferred embodiments, said fungus belongs to the species *Penicillium chrysogenum, Penicillium expansum, Penicillium digitatum,* or a combination thereof.

In more preferred embodiments, said fungus belongs to the species *Penicillium expansum.*

Preferably, said fungus belongs to the species selected from the group consisting of *Cladosporium cladosporioides, Cladosporium cucumerinum, Cladosporium herbarum, Cladosporium lignicola,* and combinations thereof.

In preferred embodiments, said fungus belongs to the species *Cladosporium cladosporioides, Cladosporium cucumerinum,* or a combination thereof.

Preferably, the elements to be extracted are provided in a form that allows the growth and development of fungi, i.e. in a form intimately mixable with a culture medium of fungi. The fungus indicated in steps 2) and 3) is able to grow either on liquid waste materials or powdered or grinded waste materials.

Preferably, in step 3), the incubation takes a period of 7 to 21 days.

Advantageously, the step 3) can be carried out at room temperature.

Suitable medium for step 3) is cornmeal agar (CMA), Czapek cellulose agar (CCA), malt extract agar (MEA), rose bengal agar (RBA) or a mixture thereof. Preferably, said medium is malt extract agar (MEA).

In step 4), the fungal biomass resulting from step 3) is collected and dried.

The drying can be performed at 40-60°C. In this way, the fungal biomass loses about 80-90% of its weight, thus significantly reducing also the overall volume of the same. Preferably, the drying takes a period of 10-100 hours, more preferably 20-80 hours. The method of the invention can be ended with a step 5a) of disposing the dried fungal biomass containing the precious metals and/or rare-earth elements bioaccumulated therein. In this regard, said method can be considered a method of depuration of waste materials by mycoremediation.

Alternatively, the method of the invention can be ended with a step 5b) of digesting the dried fungal biomass in a strong acid solution to separate the precious metals and rare-earth elements bioaccumulated therein. In this regard, said method can be considered a method of recycling by mycorecovery of said elements.

Particularly, the digestion can be performed in a concentrated nitric acid solution at 50°C under chemical hood. The resulting concentrated metal ions solution allows to extract pure metals by subsequent known processes such as electrodeposition, precipitation, etc.. The method of the invention is therefore significantly advantageous, especially considering the following aspects:
- the working conditions and the element extraction procedure proposed operates at room temperature and has a very low impact, owing to the fungus ability to bioaccumulate REE and precious metals from waste materials;
- the method does not require continuous monitoring and control, because after culturing the fungi stock on the waste materials, the fungus growth and the simultaneous absorption of elements proceed autonomously;
- the implementation of the method does not require a particularly complex plant (a bioreactor may simply consist of a bed of reaction);
- the elements can be recovered in a minimum volume of strong acid that, at the same time, eliminates the organic fungal mass.

The experimental results given in the Examples below demonstrate that the fungal stocks tested are able to bioaccumulate the elements, concentrating the latter in their own mass by a factor of about 10 compared to that in the culture medium.

These fungal stocks may, therefore, be employed both in the field of metal recovery "mycorecovery", and in the field of contaminated sludge depuration "mycoremediation". In a further aspect, the present invention concerns the use of a fungus of genus *Penicillium* isolated from mine mud, for bioaccumulating and recovering precious metals and/or rare-earth elements from mine mud waste containing the same.

In an additional aspect, the present invention concerns the use of a fungus of genus *Cladosporium* isolated from mine mud, for bioaccumulating and recovering precious metals and/or rare-earth elements from waste electrical and electronic equipment containing the same.

It should be understood that all aspects identified as preferred and advantageous for the method of the invention are to be deemed as similarly preferred and advantageous also for the use of *Penicillium* and for the use of *Cladosporium.*

It should be also understood that all the combinations of preferred aspects of the method of the invention, as well as of the use of *Penicillium* and the use of *Cladosporium,* as above reported, are to be deemed as hereby disclosed.

Below are working examples of the present invention provided for illustrative purposes.

### EXAMPLES

### Example 1.

The strains were isolated directly from contaminated matter (in this case mine mud) according to the modified dilution plate method (Gams, 1987) This technique allows the isolation of vital fungal strains from a small sample (about 1 g) of soil or contaminated matter. More precisely, the sample is diluted in sterile deionized water at different concentrations, and then 1 ml of this solution is inoculated on different solid media and incubated in the dark at 25°C for 7-15 days. The inoculated Petri dishes are controlled every day of the incubation period to monitor the potential fungal growth, and consequently allow a more efficient isolation of single strains. Later these strains are stored in axenic cultures in test tubes at room temperature, or, for a long time conservation, they could be lyophilized or cryopreserved (-80°C).

The isolated strains were identified by both macro-micromorphological features and molecular analyses.

In this case, *Penicillium expansum* was used for the mine mud treatment, and *Cladosporium sp.* for the e-waste treatment.

The best medium, Malt Extract Agar (MEA), was prepared to the target strain; the strain was inoculated on the medium and incubated at 24 °C for 7 days, to allow a good conidial maturation.

The substrate was enriched with polluted material (mine mud or e-waste), as follows:
a) MEA + Mine Mud -1 1 of mine mud, 20 g malt extract, 1 g peptone, 20 g glucose, 20 g agar.
b) MEA + E-Waste - 1 1 deionized water, 20 g malt extract, 1 g peptone, 20 g glucose, 20 g agar, 0.08 g e-waste without polymeric matrix.

Cellophane microporous film disks (90 mm diameter) were prepared, sterilized (120°C for 10 min) by autoclaving, and placed (one disk for each Petri dishes) on the enriched media surface.

The inoculum solutions were prepared by diluting 8x10⁵ conidia ml⁻¹. The conidial concentration was quantified by using a Burker Chamber. 1 ml of the above solution was inoculated on each dish.

The Petri dishes were then incubated at 24°C for 14 days.

The resulting fungal biomass was collected by removing the cellophane disks using plastic tweezers, and then by scraping the fungal biomass from the cellophane disks gently using a plastic spatula. The fungal biomass was stored in a plastic Falcon tube. Subsequently, the fungal biomass was dried in drying stove for 24 h at 40-60 °C: this caused a weight reduction of fungal biomass of about 80-90%.

The dried fungal biomass was then ready for disposal or for digestion and recovery of the bioaccumulated elements.

The two types of waste samples used in this Example:
A) electronic waste granulate and
B) wastewater sludge resulting from the mining area.

Specifically:
A) The two samples (named sample 1 and sample 2) of material obtained from RAEE were analyzed after shredding and removal of the dried fungal biomass by using a microwave treatment:
- The sample 1 contained 0% of mass carbon.
- The sample 2 still contained about 15% of mass of carbon considered as the residue of the substrate polymers and resins.
The chemical analysis was performed by using emission spectrometry with plasma source (ICP) after acid digestion of the sample.
The results are reported in Table 1 below.

**Table 1: Chemical composition of the two types of electronic waste materials.**

| Elements concentration (ppm) | | | | | | | | | | | | |
|---|---|---|---|---|---|---|---|---|---|---|---|---|
| sample | Ag | Al | Au | Cu | Fe | La | Nd | Pd | Pt | Sn | Tb | Y |
| 1 | 6130 | 9722 | 5227 | 4817 | 72616 | 2 | 6 | 40 | 1.7 | 1174 | 0.5 | 19.3 |
| 2 | 2914 | 40732 | 1115 | 83498 | 14727 | 131 | 675 | 343 | 0.2 | 27187 | 0.68 | 32.3 |

The data shown in Table 1 evidenced an inhomogeneity of chemical composition that could be ascribable to the typology of the source (e-waste).
B) The sludge wastewater resulting from a mine operations is characterized by colloidal mineral with low crystallinity named woodwardite which chemical formula is Cu₁₋ₓAlₓ(OH)₂[SO₄]_{x/2}•nH₂O. Due to a high superficial area, this mineral tends to adsorb or incorporate into its crystal structure potentially toxic elements (PTE), such as transition metals and REE elements. The results of chemical composition of woodwardite sludge are reported in Table 2.

**Table 2: Chemical composition of waste water sludge**

| Elements concentration (ppm) | | | | | | | | | | | | | | | | |
|---|---|---|---|---|---|---|---|---|---|---|---|---|---|---|---|---|
| Al | Cu | Zn | La | Nd | Tb | Y | Ce | Gd | Dy | Er | Eu | Ho | Lu | Pr | Sm | Tm |
| 145600 | >10000 | 5729 | 21.8 | 65.6 | 6.2 | 399.6 | 117 | 35.3 | 41.4 | 22.2 | 6.8 | 8.1 | 2.2 | 10.4 | 25.8 | 2.5 |

For absorption tests and selectivity of different fungi, the culture medium substrate (MEA) was enriched with salts of the metals in a concentration of 50 ppm. All the tests were compared with a reference standard composed by the fungus grown on standard culture without any addition of metal elements.

After the growth of the fungus on the growing medium substrate, the following steps have been performed:
- Drying the fungi in a furnace at a range of temperature between 40 and 60°C; the time required for release of about 80% of water in the fungi was 48-72 hours.
- The dried fungi was mineralized with concentrated strong acid (HNO₃) according to conventional protocols. The dried fungi was mineralized with concentrated strong acid (HNO₃) according to conventional protocols (Alimonti A., Violante N. 2003. Determinazione di elementi inorganici di interesse tossicologico in matrici ambientali, biologiche alimentari. Rapporti ISTISAN 03/45 pp 155. ISSN 1123-3117; Rivaro P., Ianni C., Soggia F., Frache R. 2003. Mercury speciation in environmental samples by cold vapour atomic absorption spectrometry with in situ preconcentration on a gold trap. Microchimica Acta, 158: 3-4, pp 345-352.).
- The acid solution was analyzed by emission spectrometry with plasma source (ICP)

The experimental results are reported in Tables 3 and 4 below.

**Table 3. Results expressed in ppm of the elements contained in the two types of fungus (F1 = Cladiosporum, and F2 = Penicillium) treated with wastewater sludge.**

| Strain | Al | Cu | Zn | La | Nd | Tb | Y | Ce | Gd | Dy | Er | Eu | Ho | Lu | Pr | Sm | Tm |
|---|---|---|---|---|---|---|---|---|---|---|---|---|---|---|---|---|---|
| **F1** | 641 | 10200 | 466 | 1.25 | 4.18 | 0.295 | 11.3 | 4.11 | 1.93 | 1.8 | 0.93 | 0.49 | 0.37 | 0.08 | 0.8 | 1.4 | 0.1 |
| **F2** | 4330 | 5460 | 681 | 2.75 | 10.2 | 0.774 | 24.8 | 9.67 | 4.61 | 4.12 | 2.45 | 1.2 | 0.97 | 0.2 | 0.78 | 3.4 | 0.3 |

**Table 4. Results expressed in ppm of the elements contained in the two types of fungus (F1 = Cladiosporum, and F2 = Penicillium) treated with electronic waste.**

| Strain | Ag | Al | Au | Cu | Fe | La | Nd | Pd | Pt | Sn | Tb | Y |
|---|---|---|---|---|---|---|---|---|---|---|---|---|
| **F1** | 0.03 | 14.7 | 0.03 | 14.2 | 3220 | 0.01 | 0.004 | 0.01 | 0.001 | 0.44 | 0 | 0 |
| **F2** | 0.06 | 71.6 | 0.53 | 8.36 | 7040 | 0.04 | 0.25 | 0.01 | 0.001 | 46.8 | 0 | 0.01 |

These results demonstrate:
- a general accumulation by the fungi of all the elements present in both the electronic waste and in the sludge,
- a clear selectivity of the fungi with respect of the considered elements: each fungi strain showed an accumulation capacity that varies on the basis of the type of elements and it is independent from the initial concentration,
- a selective accumulation of each fungi with respect to some metals depending on the treated matrix.

To confirm the ability of bioaccumulation and selectivity of the strains tested, further experiments have been performed, taking into account only some REE elements such as cerium and gadolinium, and two fungal strains named F6 and Penree.

Two culture media substrate (MEA) were made and enriched respectively with 0.118 g of Ce and 0.084 g of Gd. Subsequently, mycelia grown on the plates were removed, dried and subjected to ICP-MS analysis. The analysis results are shown in Table 5.

**Table 5: concentrations of gadolinium and cerium in the two types of fungus examined**

| | Gd | Ce |
|---|---|---|
| Conc. of metal in the ground (ppm) | 35 | 50 |
| Conc. of metal in *Cladosporium* (ppm) | 297 | |
| Conc. of metal in *Penicillium* (ppm) | | 293 |

The results showed that cerium was concentrated by a factor of 4.9, while gadolinium by a factor of 8.5 (from MEA fungus). Moreover, the results showed that the two fungal strains tested are excellent concentrators of rare earth metals.

## Claims

1. A method of recovering precious metals and rare-earth elements from waste materials containing the same, said method comprising the steps of:
1) providing waste materials,
2) providing a fungus isolated from mine mud and belonging to a genus selected from *Penicillium, Cladosporium* and combinations thereof,
3) inoculating and incubating said fungus on a medium added with said waste materials,
4) collecting and drying fungal biomass resulting from step 3), and
5a) disposing the dried fungal biomass containing the precious metals and/or rare-earth elements bioaccumulated therein, or
5b) digesting the dried fungal biomass in a strong acid solution to separate the precious metals and rare-earth elements bioaccumulated therein.

2. The method of claim 1, wherein said fungus belongs to the genus *Penicillium,* and to the species *Penicillium expansum.*

3. The method of claim 1, wherein said fungus belongs to the genus *Cladosporium*

4. The method of any one of claims 1-3, wherein, in step 3), the incubation takes a period of 7 to 21 days.

5. The method of any one of claims 1-4, wherein the step 3) is carried out at room temperature.

6. Use of a fungus of genus *Penicillium* isolated from mine mud, for bioaccumulating and recovering precious metals and/or rare-earth elements from mine mud waste containing the same.

7. The use of claim 6, wherein the fungus belongs to the species *Penicillium expansum.*

8. Use of a fungus of genus *Cladosporium* isolated from mine mud, for bioaccumulating and recovering precious metals and/or rare-earth elements from waste electrical and electronic equipment containing the same.
